# EUROPÄISCHE PATENTSCHRIFT

(11) **EP 2 831 988 B1**
(45) Veröffentlichungstag und Bekanntmachung des Hinweises auf die Patenterteilung: **20.02.2019**
(21) Anmeldenummer: 13714258.4
(22) Anmeldetag: 27.03.2013
(51) Int. Cl.: H02M 1/32, H02P 9/00, H02J 3/38

(54) **CHOPPERVERSTÄRKTER UMRICHTER FÜR WINDENERGIEANLAGEN**
CHOPPER-BOOSTED CONVERTER FOR WIND TURBINES
CONVERTISSEUR À AMPLIFICATEUR À DÉCOUPAGE POUR ÉOLIENNES

(30) Priorität: 29.03.2012 DE 102012006259
(43) Veröffentlichungstag der Anmeldung: 04.02.2015
(73) Patentinhaber: Senvion GmbH, 22297 Hamburg (DE)
(72) Erfinder: LETAS, Heinz-Hermann, 24796 Bovenau (DE); MOHR, Malte, 24242 Felde (DE)
(74) Vertreter: Glawe, Delfs, Moll
(86) Internationale Anmeldenummer: PCT/EP2013/056587
(87) Internationale Veröffentlichungsnummer: WO 2013/144242

(56) Entgegenhaltungen:
- DE-A1-102010 039 332
- US-A1- 2011 140 430
- US-A1- 2011 193 345
- DIANGUO XU ET AL: "Reactive power analysis and control of doubly fed induction generator wind farm", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10, XP031541454, ISBN: 978-1-4244-4432-8

## Beschreibung

Die Erfindung betrifft einen Umrichter mit einer Umrichtersteuerung für Windenergieanlagen, die einen Windrotor mit einem davon angetriebenen Generator sowie einen Chopper aufweisen, wobei die Umrichtersteuerung einen Konfigurationsdatensatz für dynamische und statische Grenzwerte des Umrichters umfasst.

Umrichter der eingangs genannten Art sind insbesondere bei Windenergieanlagen im Einsatz, die nicht nur zur Erzeugung von Wirkleistung dienen, sondern welche darüber hinaus auch Blindleistung bereitstellen. Zur Erhöhung der Netzqualität wird in zunehmendem Umfang auch von Windenergieanlagen erwartet, dass sie in beträchtlichem Maße Blindleistung auf Aufforderung durch die Netzbetreiber zur Verfügung stellen. Das Bereitstellen von Blindleistung ist zu einer Netzdienstleistung geworden, welche vielerorts Voraussetzung zum Anschluss und wirtschaftlichen Betrieb einer Windenergieanlage an ein Energieübertragungsnetz ist. Es versteht sich, dass durch die Bereitstellung der Blindleistung der normale Betrieb der Windenergieanlage möglichst wenig beeinträchtigt werden soll, und dass die Windenergieanlage insbesondere weiterhin betriebssicher, insbesondere böenfest, sein muss.

Zwar ist es grundsätzlich möglich, mehr Blindleistung durch Ausrüstung mit größer dimensionierten Umrichtern bereitzustellen. Dieser Ansatz hat jedoch den Nachteil, dass er zu ausgesprochen hohen Kosten führt. Weiter hat er den Nachteil, dass je nach Anforderungen des Netzbetreibers ansonsten identische Windenergieanlagen mit unterschiedlichen Umrichtern versehen werden müssten, was die Bauteilekomplexität steigert. Schließlich ist das einfache Ausrüsten mit einem größeren Umrichter ungünstig für die Nachrüstung, da dies ausgesprochen aufwendig und in vielen Fällen nicht wirtschaftlich durchführbar ist. Es besteht daher ein Bedarf, einen Umrichter der eingangs genannten Art dahingehend weiterzubilden, dass trotz unveränderter aktiver Komponenten des Umrichters eine höhere Dauerlast bereitgestellt werden kann, insbesondere zur erhöhten Bereitstellung von Blindleistung. Die Erfindung hat sich die Aufgabe gestellt, einen solchen Umrichter bereitzustellen und ein Verfahren zu dessen Betrieb anzugeben.

Die erfindungsgemäße Lösung liegt in den Merkmalen der unabhängigen Ansprüche. Vorteilhafte Weiterbildungen sind Gegenstand der abhängigen Ansprüche.

Bei einem Umrichter mit einer Umrichtersteuerung für eine Windenergieanlage, die einen mit dem Umrichter verbundenen Generator und einen Chopper aufweist, wobei die Umrichtersteuerung einen für eine erste Toleranzzeit zulässigen dynamischen Grenzwert und einen statischen Grenzwert des Umrichters umfasst, ist erfindungsgemäß vorgesehen ein Überstrommodul, das einen Grenzwertexpander, welcher dazu ausgebildet ist, den statischen Grenzwert um einen Teil der Differenz zum dynamischen Grenzwert als Zusatzstrom zu erhöhen, und ein Dynamikmodul umfasst, welches mit dem Grenzwertexpander derart zusammenwirkt, dass Überströme zwischen dem um den Zusatzstrom erhöhten statischen Grenzwert und dem dynamischen Grenzwert in einer ersten Stufe auf den Umrichter und in einer zweiten Stufe zumindest teilweise zum Chopper geleitet werden, wobei nach einer zweiten Toleranzzeit, die vorzugsweise kleiner als die erste Toleranzzeit ist, in die zweite Stufe umgeschaltet wird.

Nachfolgend seien zunächst einige Begriffe erläutert:
Unter einem statischen Grenzwert wird der Stromnennwert verstanden, welchen der Umrichter über eine an sich unbegrenzte Zeitdauer, also dauernd, zu liefern geeignet ist. Dieser Grenzwert ist in der Regel identisch mit dem (Dauer-)Nennstrom des Umrichters.

Unter dem dynamischen Grenzwert wird derjenige Strom verstanden, welchen der Umrichter unter Ausnutzung seiner (insbesondere thermischen) Reserven für eine begrenzte Zeitdauer aufzunehmen im Stande ist. Dieser auch als kurzzeitiger Spitzenstrom bezeichnete Grenzwert kann beträchtlich höher liegen als der statische Grenzwert. Bei praktisch ausgeführten Umrichtern kann der dynamische Grenzwert beinahe doppelt so hoch sein wie der statische Grenzwert, ist jedoch häufig auf eine Toleranzzeit von nur wenigen Sekunden (beispielsweise 6 s) begrenzt. Die Zeitdauer, über die der dynamische Grenzwert anliegen darf, ohne dass es zu einer Überlastung kommt, wird als Toleranzzeit bezeichnet.

Unter Zusatzstrom wird ein Strom verstanden zwischen statischem Grenzwert und dem erfindungsgemäßen erhöhten Grenzwert; darüber hinausgehende Ströme werden als Überströme bezeichnet.

Die Erfindung beruht auf dem Gedanken, im Vergleich zur normalen Konfiguration eines Umrichters einen erhöhten Wert für den statischen Grenzwert einzustellen ("erhöhter Grenzwert") und damit die für dynamische Schwankungen verbleibende Reserve zum dynamischen Grenzwert entsprechend zu verkleinern. Dieser Stromwert, um den der statische Grenzwert erhöht und die Stromreserve bis zum dynamischen Grenzwert entsprechend verringert ist, wird als Zusatzstrom bezeichnet. Dieser Zusatzstrom vergrößert den vom Umrichter abgebbaren Gesamtstrom. Hierbei handelt es sich um einen Scheinstrom, so dass wegen der vektoriellen Zusammenhänge zwischen Wirkstrom und Blindstrom eine Erhöhung des Scheinstroms eine überproportionale Erhöhung des Blindstroms ermöglicht. Derselbe Umrichter ist damit befähigt, überproportional mehr Blindstrom und damit Blindleistung bereitzustellen.

Die Erfindung hat erkannt, dass noch ein wesentlicher Zusatz erforderlich ist, da eine reine Grenzwerterhöhung nicht ausreicht, und die Erfindung stellt diesen Zusatz bereit. Denn beließe es man bei der einfachen Umstellung des Umrichters auf einen erhöhten statischen Grenzwert, so hätte dies unweigerlich die negative Folge einer geringeren Festigkeit des Umrichters gegenüber Spitzenstrombelastungen, wie sie insbesondere bei kurzzeitigen Überdrehzahlen der Windenergieanlagen (sog. Böenfestigkeit) oder bei Netzfrequenzeinsenkungen auftreten können. Denn nicht nur die verbleibende Stromreserve bis zum dynamischen Grenzwert ist dann verringert, sondern darüber hinaus sind die aktiven Komponenten des Umrichters bereits thermisch aufgrund des Zusatzstroms stärker belastet, so dass bei einem Anstieg des Stroms auf den dynamischen Grenzwert die thermische Belastungsgrenze schneller erreicht wäre; beließe man es dabei, so wäre die praktische Verwendbarkeit des Umrichters für reale Betriebsbedingungen mit schwankender Windstärke und gegebenenfalls auftretenden Netzfehlern nicht mehr ausreichend.

Hier setzt die Erfindung an, indem sie ein Überstrommodul bereitstellt, welches bei einem Auftreten von Überströmen, d. h. Ströme oberhalb des um den Zusatzstrom erhöhten statischen Grenzwerts bis hin zum dynamischen Grenzwert, nicht nur den Umrichter mit dem erhöhten Strom beaufschlagt, sondern auch den ihm zugeordneten Chopper mit einbezieht. Das Überstrommodul weist zwei Schaltstufen auf, eine erste Schaltstufe in der der Überstrom nur auf den Umrichter mit seinen aktiven Komponenten (Schaltelemente) geführt ist und eine zweite Stufe, bei welcher der Überstrom (alternativ oder zusätzlich) in den Chopper geleitet wird. Das Umschalten von der ersten auf die zweite Stufe erfolgt nach einer gewissen Zeit, der zweiten Toleranzzeit. Tritt beispielsweise im Betrieb aufgrund von Überdrehzahlen der Maximalwert des dynamischen Stromgrenzwerts auf, so wird nur für die (verhältnismäßig kurze) zweite Toleranzzeit dieser hohe Strom in den Umrichter geleitet, und nach Ablauf der zweiten Toleranzzeit zur thermischen Entlastung des Umrichters der Strom in den Chopper geleitet. Durch das Umleiten in den Chopper wird der Umrichter mit seinen aktiven Komponenten kontrolliert thermisch entlastet. Die Betriebssicherheit ist somit auch bei Überströmen bis hin zum dynamischen Grenzwert gesichert.

Die Erfindung ermöglicht es damit, den Umrichter mit erhöhtem statischem Grenzwert zu betreiben, um so mehr Blindleistung zur Stützung des Netzes bereitzustellen. Insbesondere wird damit das Leistungsvermögen des Umrichters und damit ausgerüsteter Windenergieanlagen für die - zunehmend wichtiger werdenden - Netzprodukte Q und cos ϕ erhöht, wobei dies ohne Änderung von Komponenten und damit praktisch ohne Mehrkosten (durch geringfügig verstärkte Kabel und gegebenenfalls Netzdrossel) erreicht wird. Insbesondere ist es dank der Erfindung nicht erforderlich, die im Vergleich ausgesprochen teuren aktiven Komponenten des Umrichters zu verändern.

Für das Umschalten zwischen den Stufen ist vorzugsweise ein Dynamikmodul ist mit Vorteil so ausgebildet, dass es die zweite Toleranzzeit stromabhängig bestimmt, und zwar vorzugsweise über ein Strom-Zeit-Integral. Es hat sich gezeigt, dass die Toleranzzeit je nach der Höhe des dynamisch auftretenden Überstroms variiert. Ist der Überstrom nur gering, so kann die zweite Toleranzzeit größer bemessen sein als bei höherem Überstrom. Besonders bewährt hat sich hier ein Strom-Zeit-Integral. Hier geht zweckmäßigerweise der Strom quadratisch ein, so dass ein Energiemaß gebildet ist, welches die thermische Belastung insbesondere der aktiven Komponenten des Umrichters abbildet.

Vorzugsweise ist das Überstrommodul so weitergebildet, dass es eine dritte Stufe aufweist, in der die erste und zweite Stufe des Überstrommoduls betätigt sind. Damit fließt der Überstrom sowohl in den Umrichter unter voller Ausnutzung des dynamischen Grenzwerts als auch in den Chopper, um so noch weiteren Strom jenseits des dynamischen Grenzwerts aufzunehmen ("Ultra-Strom"). Mit diesem Ultra-Strom kann der dynamisch aufnehmbare Strom soweit erhöht werden, dass der Abstand zum erhöhten statischen Grenzwert wieder dem ursprünglichen Abstand zwischen dynamischen Grenzwert und (nicht erhöhtem) statischen Grenzwert entspricht. Damit weist der Umrichter zugleich eine erhöhte Toleranz in Bezug auf dynamische Strombelastung auf. Es kann also sogar der dynamische Grenzwert erhöht werden, ohne dass hierfür hardwaremäßige Änderungen am Umrichter erforderlich sind.

Zweckmäßigerweise ist ein Freigabeeingang vorgesehen, über den der Grenzwertexpander freigebbar beziehungsweise sperrbar ist. Fehlt ein Signal am Freigabeeingang, so ist der Grenzwertexpander gesperrt und der Umrichter erhält keinen erhöhten statischen Grenzwert. Er kann dann keinen Zusatzstrom bereitstellen. Dieser Freigabeeingang ermöglicht es, eine Windenergieanlage von dem Bereitstellen von Zusatzstrom auszuschließen, was insbesondere bei kritischen Betriebsbedingungen - insbesondere bei böigem Wind - von Bedeutung sein kann für die Betriebssicherheit der Anlagen. Vorzugsweise ist zu diesem Zweck ein Böenmodul vorgesehen, welches einen Ausgang aufweist, der an dem Freigabeeingang angelegt ist. Das Böenmodul ist dazu ausgebildet, anhand der von der Windenergieanlage bereitgestellten Parameter (diese können Leistungsdaten der Erzeugung der elektrischen Leistung oder Winddaten sein) einen Böenindex zu bestimmen und bei Überschreiten eines einstellbaren Grenzwerts ein Ausgangssignal bereitzustellen. Damit kann bei böigem Wind die Änderung des statischen Grenzwerts und damit das Bereitstellen von Zusatzstrom blockiert werden, damit die Windenergieanlage bestmöglich zum Ausgleich der Windböen befähigt ist. Zweckmäßigerweise weist das Böenmodul mehrere Ausgänge auf, die zum Ansteuern weiterer Windenergieanlagen ausgebildet sind.

Vorzugsweise ist das Böenmodul an einem Parkmaster angeordnet, der einen Windpark mit mehreren Windenergieanlagen kontrolliert. Damit kann das an dem Parkmaster angeordnete Böenmodul so ausgebildet sein, dass die vom Netzbetreiber angeforderte Bereitstellung von zusätzlicher Blindleistung durch das Freigeben von Zusatzstrom für solche Windenergieanlagen des Windparks erreicht wird, welche nicht von Böen betroffen sind. Hierbei macht man sich die Erkenntnis zu Nutze, dass aufgrund der räumlichen Ausdehnung eines Windparks immer nur ein Teil der Windenergieanlagen von Böen betroffen ist.

Die Erfindung erstreckt sich auch auf einen Windpark mit einem Parkmaster und mehreren Windenergieanlagen, die mit einem Umrichter wie vorstehend beschrieben versehen sind. Zur näheren Erläuterung wird auf vorstehende Beschreibung verwiesen.

Die Erfindung erstreckt sich weiter auf ein Verfahren zum Betreiben eines Umrichters für eine Windenergieanlage mit einem mit dem Umrichter verbundenen Generator und einem Chopper sowie einer Umrichtersteuerung für den Umrichter, wobei die Umrichtersteuerung einen für eine erste Toleranzzeit zulässigen dynamischen Grenzwert und einen statischen Grenzwert des Umrichters umfasst, wobei erfindungsgemäß vorgesehen ist, einen Zusatzstrom bereitzustellen, indem der statische Grenzwert des Umrichters erhöht wird um einen Teil der Differenz zum dynamischen Grenzwert, wobei Überströme zwischen dem um den Zusatzstrom erhöhten statischen Grenzwert und dem dynamischen Grenzwert in einer ersten Stufe auf den Umrichter und einer zweiten Stufe zumindest teilweise zum Chopper geleitet werden, wobei nach einer zweiten Toleranzzeit, die kleiner als die erste Toleranzzeit ist, in die zweite Stufe umgeschaltet wird.

Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1: eine schematische Ansicht einer Windenergieanlage gemäß einem Ausführungsbeispiel der Erfindung;
- Fig. 2a, b: Leistungskennlinien der Windenergieanlage gemäß Fig. 1 insgesamt und bezogen auf den Umrichter;
- Fig. 3: ein Blockschaltbild eines Überstrommoduls an einem Umrichter der Windenergieanlage;
- Fig. 4a-b: Strom-Zeit-Diagramme für eine herkömmliche Windenergieanlage und die Windenergieanlage gemäß dem Ausführungsbeispiel der Erfindung; und
- Fig. 5: ein Strom-Zeit-Diagramm gemäß einer Variante des Ausführungsbeispiels.

Eine Windenergieanlage gemäß einem Ausführungsbeispiel der Erfindung umfasst einen von einem Windrotor 10 angetriebenen Generator 1 mit einem Umrichter 2 zur Erzeugung elektrischer Energie. Sie wird über ein Leitungskabel 3 und einen an der Windenergieanlage angeordneten Mittelspannungstransformator 4 in ein Mittelspannungsnetz 5 gespeist. Bei dem Mittelspannungsnetz kann es sich insbesondere um ein parkinternes Netz eines Windparks handeln, der einen Parkmaster 50 zur Kontrolle der Windenergieanlagen im Windpark aufweist. Weiter ist für den Umrichter 2 eine Umrichtersteuerung 20 und ein Chopper 6 mit einer Choppersteuerung 60 vorgesehen. Zur übergeordneten Steuerung der Windenergieanlage ist eine Betriebssteuerung 7 vorgesehen.

Der Generator 1 ist in dem dargestellten Ausführungsbeispiel als doppeltgespeister Asynchrongenerator ausgeführt. Er umfasst einen Stator 11 und einen umlaufenden Rotor 12. Der Stator 11 ist unmittelbar an das Leitungskabel 3 angeschlossen. Der Rotor 12 ist über den Umrichter 2 mit dem Leitungskabel 3 verbunden. Der Umrichter 2 umfasst einen maschinenseitigen Wechselrichter 21, einen netzseitigen Wechselrichter 23 und einen dazwischen liegenden, die beiden Wechselrichter 21, 23 verbindenden Gleichspannungs-Zwischenkreis 22. Die beiden Wechselrichter enthalten eine Mehrzahl von aktiven Schaltelementen, die durch das Bezugszeichen 24 symbolisiert sind.

Die Umrichtersteuerung 20 steuert den Umrichter 2 so an, dass die vom Rotor 12 erzeugte elektrische Leistung, die eine dreiphasige Wechselspannung mit einer von der Drehzahl des Windrotors abhängigen Frequenz ist, vom maschinenseitigen Wechselrichter 21 in Gleichspannung umgewandelt und in den Zwischenkreis 22 geleitet wird. Der netzseitige Wechselrichter 23 wird vom Zwischenkreis 22 versorgt und wandelt die entnommene elektrische Leistung in dreiphasige Wechselspannung mit fester Frequenz, die gleich ist der Netzfrequenz des angeschlossenen Netzes 5. Diese Betriebsart, bei der der Umrichter 2 elektrische Leistung in das Netz 5 abgibt, wird als übersynchroner Betrieb bezeichnet. Weiter gibt es eine Betriebsart im untersynchronen Betrieb. Sie wird verwendet bei einer Rotordrehzahl, die kleiner ist als die der Netzfrequenz entsprechende Synchrondrehzahl n_{sync}, also bei geringer Windstärke. Hierbei ist die Richtung des Leistungsflusses durch den Umrichter 2 umgekehrt. Der netzseitige Wechselrichter 23 speist den Zwischenkreis 22, der wiederum den maschinenseitigen Wechselrichter 21 versorgt zum Einspeisen von Erregerstrom in den Rotor 12.

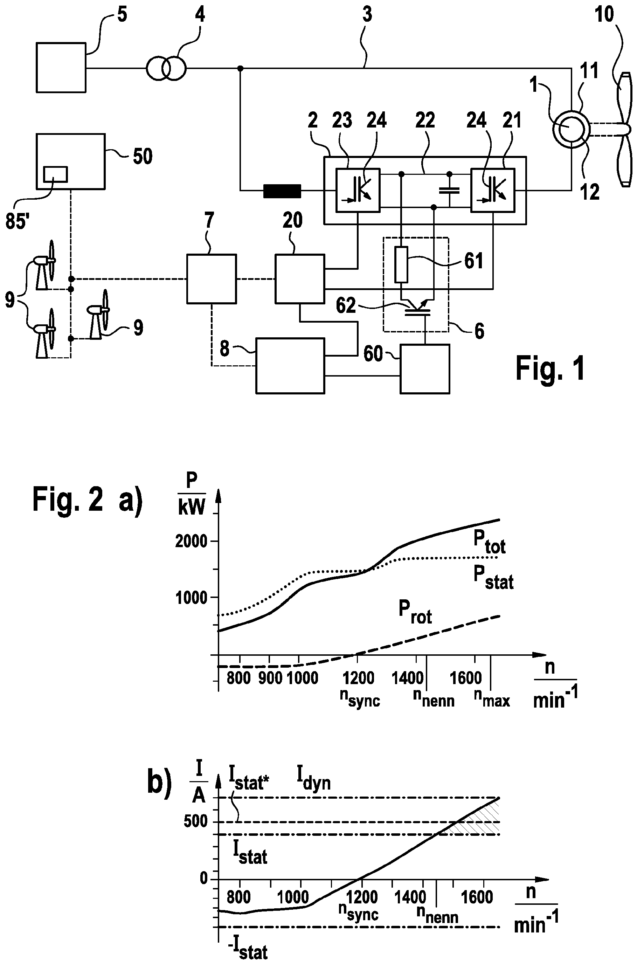

Die sich in Abhängigkeit von der Drehzahl ergebenden Leistungsflüsse sind in Fig. 2a dargestellt. Der (im Bild linke) Drehzahlbereich unterhalb der Synchrondrehzahl n_{sync} zeigt den untersynchronen Betrieb, und der Drehzahlbereich oberhalb den übersynchronen Betrieb. Der für den stationären Betrieb zulässige Bereich geht bis zur Nenndrehzahl nₙₑₙₙ, darüber schließt sich bis zur Maximaldrehzahl nₘₐₓ ein dynamischer Überlastbereich an, der nur kurzzeitig bei Böen verwendet werden darf. Der größte Teil der elektrischen Leistung wird vom Stator 11 eingespeist (Pₛₜₐₜ, s. punktierte Linie in Fig. 2a). Ein kleinerer Teil der Leistung, der im untersynchronen Betrieb negativ ist (d. h. umgekehrter Leistungsfluss), wird vom Rotor 12 bereitgestellt bzw. im untersynchronen Betrieb verbraucht (Pᵣₒₜ, s. gestrichelte Linie). Die insgesamt von der Windenergieanlage abgegebene Leistung Pₜₒₜ ist durch die durchgezogene Linie visualisiert.

Die im Umrichter 2 fließenden Ströme sind in Fig. 2b dargestellt. Statischer Grenzwert Iₛₜₐₜ und dynamischer Grenzwert I_{dyn} sind als horizontale strichpunktierte Linie dargestellt. Man erkennt deutlich den negativen Stromfluss im niedrigen Drehzahlbereich, d. h. im untersynchronen Betrieb. Im übersynchronen Betrieb steigt der Stromfluss linear an, bis er etwa bei Nenndrehzahl nₙₑₙₙ den statischen Stromgrenzwert Iₛₜₐₜ erreicht, der im Böenbetrieb überschritten werden kann bis zum Erreichen des dynamischen Stromgrenzwerts I_{dyn} (schraffierter Bereich). Droht eine Überschreitung von I_{dyn} oder verweilt der Strom zulange im nur dynamisch zulässigen Bereich (schraffiert), so erfolgt zum Schutz der Komponenten eine Stromreduktion auf den (für unbegrenzte Zeit zulässigen) statischen Grenzwert Iₛₜₐₜ. Die Reduktion erfolgt mittels des Choppers 6, wie nachstehend beschrieben.

Der Chopper 6 ist an den Zwischenkreis angeschlossen. Er umfasst einen Widerstand 61 zum Dissipieren überschüssiger Energie und ein Schaltelement 62, welches den Widerstand 61 zu- und abschaltet. Die Umrichtersteuerung 20 wirkt mit der Choppersteuerung 60 zusammen zur Überwachung der Gleichspannung im Zwischenkreis. Wird die Spannung zu hoch betätigt die Choppersteuerung das Schaltelement 62. Damit fließt Strom durch den Widerstand 61, wodurch die Spannung im Zwischenkreis 22 wirksam verringert wird.

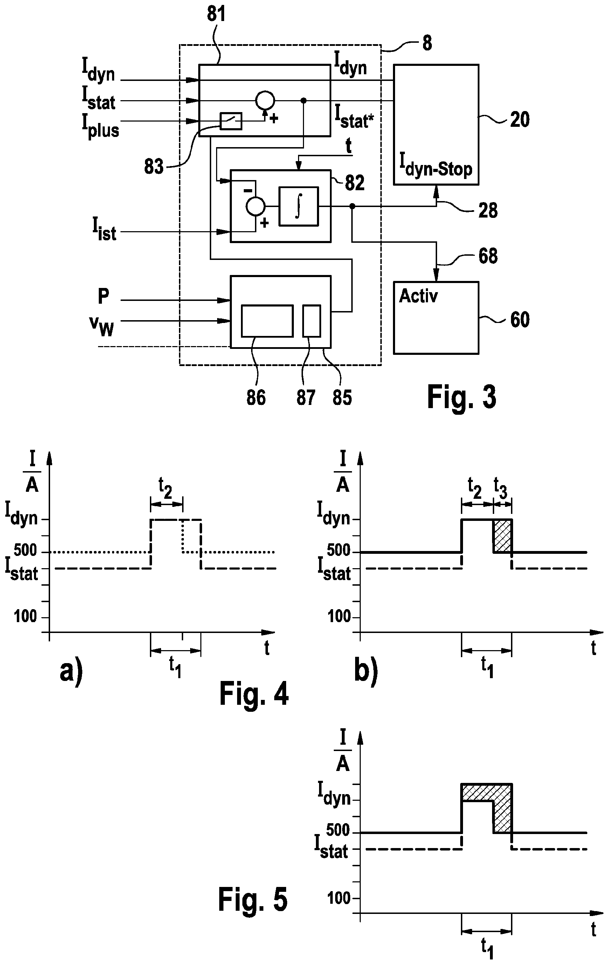

Um mit einem an sich unveränderten Umrichter 2 einen höheren statischen Strom zu ermöglichen, dient erfindungsgemäß ein Überstrommodul 8, wie es in Fig. 3 dargestellt ist. Dessen Aufbau und die Funktionsweise werden nachfolgend beschrieben. An die Umrichtersteuerung 20 sind Grenzwerte für den statischen Grenzwert Iₛₜₐₜ und den dynamischen Grenzwert für den Strom angelegt. Erfindungsgemäß ist ein Grenzwertexpander 81 dazwischengeschaltet, an dem ein zusätzlicher Eingang für einen gewünschten Zusatzstrom Iₚₗᵤₛ vorgesehen ist. Der Grenzwertexpander 81 erhöht den statischen Grenzwert Iₛₜₐₜ um den gewünschten Zusatzstrom und bildet so den modifizierten statischen Grenzwert Iₛₜₐₜ*, der als Grenzwert an die an sich bekannte Umrichtersteuerung 20 angelegt ist. Der dynamische Grenzwert I_{dyn} bleibt bei diesem Ausführungsbeispiel unverändert. Der modifizierte statische Grenzwert Iₛₜₐₜ* ist zum Vergleich mit gestrichelter Linie in Fig. 2b dargestellt.

Neben dem Grenzwertexpander 81 umfasst das Überstrommodul 8 ferner ein Dynamikmodul 82, das an die Umrichtersteuerung 20 und an die Choppersteuerung 60 angeschlossen ist. Es weist Eingänge auf für den tatsächlich im Umrichter fließenden Strom Iᵢₛₜ, den modifizierten statischen Grenzwert Iₛₜₐₜ* und die Zeit t. Das Dynamikmodul 82 bestimmt durch Differenzbildung, ob der tatsächliche Strom über dem modifizierten Grenzwert Iₛₜₐₜ* liegt, ob also Überstrom fließt. Wenn ja, wird der Betrag des Überstroms über die Zeit integriert um so ein Maß für die thermische Belastung der Schaltelemente des Umrichters 20 zu generieren. Erreicht es einen bestimmten Wert, wird ein Schaltsignal an zum Umschalten der Stufen ausgegeben. Im Normalbetrieb ist das Überstrommodul in seine erste Stufe geschaltet, welchen den Betrieb des Umrichters 2 mit dem dynamischen Grenzwert erlaubt. Liegt ein Schaltsignal von dem Dynamikmodul 82 an, so wird in die zweite Stufe umgeschaltet, in welcher der Betrieb des Umrichters 2 mit dem dynamischen Grenzwert über einen Sperrsignaleingang 28 in der Umrichtersteuerung 20 blockiert wird und stattdessen der Chopper 6 über einen Aktivierungssignaleingang 68 der Choppersteuerung 60 betätigt wird. Damit werden die Überströme in den Chopper 6 umgeleitet, so dass die Schaltelemente 24 des Umrichters 2 geschont werden und sich somit thermisch erholen können.

In Fig. 4a sind mit gestrichelter Linie die Grenzwerte für Iₛₜₐₜ, I_{dyn} für eine herkömmliche Windenergieanlage gezeigt. Mit einer punktierten Linie sind zum Vergleich die entsprechenden Grenzwerte bei einer einfachen Erhöhung des statischen Grenzwerts Iₛₜₐₜ' dargestellt. Man erkennt, dass durch einfaches Bereitstellen eines übergroßen statischen Grenzwerts Iₛₜₐₜ' zwar der mögliche statische Strom erhöht werden könnte, dass jedoch die erste Toleranzzeit t₁ für den dynamischen Grenzwert dann deutlich verringert wäre (auf t₂). Dies ist für sich genommen unakzeptabel, da damit keine ausreichende Überlastsicherheit, insbesondere Böenfestigkeit, mehr gegeben ist. Wie in Fig. 4b dargestellt, wird erfindungsgemäß die ursprüngliche Zeitdauer t₁ für den dynamischen Grenzwert wieder hergestellt, indem nach Ablauf einer zweiten Toleranzzeit t₂, die kleiner ist als die erste Toleranzzeit t₁, in einer zweiten Stufe der Chopper aktiviert wird (kreuzschraffierter Bereich, Zeitraum t₃), der den Überstrom dynamisch übernimmt. Damit werden die Halbleiter 24 im Umrichter 2 soweit entlastet, dass durch sie nur noch ein Strom maximal gleich dem statischen Grenzwert fließt. Die Halbleiter 24 sind damit vor Überlastung geschützt, und die volle Überlastsicherheit (insbesondere Böenfestigkeit) wird somit gewährleistet. Zusätzlicher Hardwareaufwand erfordert die Erfindung dafür praktisch nicht, da der Chopper 6 ohnehin vorhanden ist. Somit kann ohne Mehrkosten der zulässige statische Strom des Umrichters 2 erhöht werden, und die Überlastsicherheit (insbesondere Böenfestigkeit) bleibt erhalten.

Optional kann das Überstrommodul 8 auch so ausgebildet sein, dass es bereits in der ersten Stufe den Chopper 6 betätigt, und zwar zusätzlich zu dem Überstrom im Umrichter 2, also noch während der zweiten Toleranzzeit t₂ (s. links gelegener Teil des kreuzschraffierten Bereichs in Fig. 5). Bei dieser Betriebsart, die auch als "dritte Stufe" bezeichnet wird, kann kurzfristig auch der dynamische Grenzwert erhöht werden. Damit kann beim hardwaremäßig unveränderten Umrichter 2 nicht nur der statische Grenzwert um den Zusatzstrom erhöht werden, sondern auch der dynamische Grenzwert, so dass der ursprüngliche Abstand zwischen statischem und dynamischem Grenzwert wieder hergestellt ist. Optional umfasst das Überstrommodul 8 weiter ein Böenmodul 85. Es weist Eingänge für die Windgeschwindigkeit v_{w} und ggf. auch für die von der Windenergieanlage abgegebene Leistung P auf. An seinem Ausgang wird ein Sperrsignal ausgegeben, welches an den Grenzwertexpander 81 angelegt ist und dort über ein Sperrglied 83 die Anhebung des statischen Grenzwerts um den Zusatzstrom blockiert. Das Böenmodul 85 enthält einen Lastrechner 86, der aus Daten der von der Windenergieanlage erzeugten elektrischen Wirkleistung P und den Daten über die jeweilige Windgeschwindigkeit einen Böenindex bestimmt. Erkennt ein Komparator 87, dass dieser über einem kritischen Wert liegt, wird das Sperrsignal am Ausgang ausgegeben. Damit kann bei böigem Wind die Änderung des statischen Grenzwerts und damit das Bereitstellen von Zusatzstrom blockiert werden, damit die Windenergieanlage bestmöglich zum Ausgleich der Windböen befähigt ist. Das Böenmodul kann alternativ auch am Parkmaster 50 angeordnet sein (s. Funktionsblock 85'). Es weist mehrere Ausgänge auf, die zum Ansteuern weiterer Windenergieanlagen 9 dienen.

Der mit der Bereitstellung von Zusatzstrom ermöglichte Gewinn insbesondere an zusätzlich einspeisbarer Blindleistung Q ist wegen des vektoriellen Zusammenhangs zwischen Wirk- und Blindstrom beträchtlich. Für einen Betrieb bei Volllast, also wenn die abgegebene Wirkleistung gleich der Nennleistung ist, kann dank der Erfindung Blindleistung zusätzlich eingespeist werden. Ein Beispiel verdeutlicht dies: bei einer Nennleistung in Höhe der maximalen Wirkleistung von P = 2000 kW kann zusätzlich noch Blindleistung in Höhe von Q = 640 kVAr eingespeist werden, also ein sehr beträchtlicher Wert bei nur geringstem zusätzlichen Aufwand.

## Patentansprüche

1. Umrichter mit einer Umrichtersteuerung (20) für eine Windenergieanlage, die einen mit dem Umrichter (2) verbundenen Generator (1) und einen Chopper (6) aufweist, wobei die Umrichtersteuerung (20) einen für eine erste Toleranzzeit (t₁) zulässigen dynamischen Grenzwert (I_{dyn}) und einen statischen Grenzwert (Iₛₜₐₜ) des Umrichters (2) umfasst, wobei der statische Grenzwert (Iₛₜₐₜ) ein Stromnennwert ist, welchen der Umrichter (2) über eine an sich unbegrenzte Zeitdauer zu liefern geeignet ist,
**dadurch gekennzeichnet, dass**
ein Überstrommodul (8) vorgesehen ist, das einen Grenzwertexpander (81), welcher dazu ausgebildet ist, den statischen Grenzwert (Iₛₜₐₜ) um einen Teil der Differenz zum dynamischen Grenzwert (I_{dyn}) als Zusatzstrom (Iₚₗᵤₛ) zu erhöhen, und ein Dynamikmodul (82) umfasst, welches mit dem Grenzwertexpander (81) derart zusammenwirkt, dass Überströme zwischen dem um den Zusatzstrom (Iₚₗᵤₛ) erhöhten statischen Grenzwert (Iₛₜₐₜ*) und dem dynamischen Grenzwert (I_{dyn}) in einer ersten Stufe auf den Umrichter (2) und in einer zweiten Stufe zumindest teilweise zum Chopper (6) geleitet werden, wobei nach einer zweiten Toleranzzeit (t₂) in die zweite Stufe umgeschaltet wird.

2. Umrichter nach Anspruch 1, **dadurch gekennzeichnet, dass** die zweite Toleranzzeit (t₂) kleiner als die erste Toleranzzeit (t₁) ist.

3. Umrichter nach Anspruch 1 oder 2, **dadurch gekennzeichnet, dass** das Dynamikmodul (82) die zweite Toleranzzeit (t₂) stromabhängig bestimmt, vorzugsweise über ein Strom-Zeit-Integral.

4. Umrichter nach einem der vorangehenden Ansprüche, **dadurch gekennzeichnet, dass** das Überstrommodul (8) eine dritte Stufe aufweist, in der die erste und zweite Stufe gleichzeitig aktiviert sind.

5. Umrichter nach einem der vorangehenden Ansprüche, **dadurch gekennzeichnet, dass** der Grenzwertexpander (81) ein Sperrglied (83) aufweist, das an einen Sperreingang angeschlossen ist und dazu ausgebildet ist, die Erhöhung des statischen Grenzwerts zu blockieren.

6. Umrichter nach einem der vorangehenden Ansprüche, **dadurch gekennzeichnet, dass** ein Böenmodul (85) vorgesehen ist, das Eingänge für Leistung der Windenergieanlage und/oder Windgeschwindigkeit aufweist und dazu ausgebildet ist, bei Überschreiten eines Grenzwerts ein Sperrsignal auszugeben.

7. Umrichter nach Anspruch 5 und 6, **dadurch gekennzeichnet, dass** der Ausgang des Böenmoduls (85) an den Eingang des Sperrglieds (83) angeschlossen ist.

8. Umrichter nach Anspruch 6 oder 7, **dadurch gekennzeichnet, dass** das Böenmodul (85) mehrere Ausgänge zum Ansteuern mehrerer Windenergieanlagen aufweist und vorzugsweise an einem Parkmaster (50) eines Windparks angeordnet ist.

9. Windpark mit einem Parkmaster (50) und einer Mehrzahl von Windenergieanlagen, die jeweils einen Generator (1) und einen Umrichter (2) nach Anspruch 1 aufweisen.

10. Windpark nach Anspruch 9, **dadurch gekennzeichnet, dass** das Überstrommodul (8) an den jeweiligen Windenergieanlagen angeordnet ist.

11. Windpark nach Anspruch 9, **dadurch gekennzeichnet, dass** das Überstrommodul (8) an dem Parkmaster (50) angeordnet ist.

12. Windpark nach einem der Ansprüche 9 bis 11, **dadurch gekennzeichnet, dass** ein Böenmodul (85') vorgesehen ist, das Eingänge für Leistung der Windenergieanlage und/oder Windgeschwindigkeit aufweist und dazu ausgebildet ist, bei Überschreiten eines Grenzwerts ein Sperrsignal auszugeben, wobei das Böenmodul (85') vorzugsweise am Parkmaster (50) angeordnet ist.

13. Windpark nach Anspruch 12, **dadurch gekennzeichnet, dass** das Böenmodul (85') eine Mehrzahl von Ausgängen für die einzelnen Windenergieanlagen des Windparks aufweist.

14. Windpark nach einem dar Ansprüche 9 bis 13, **dadurch gekennzeichnet, dass** das Überstrommodul (8) nach einem der Ansprüche 2 bis 4 weitergebildet ist.

15. Verfahren zum Betreiben eines Umrichters (2) für eine Windenergieanlage mit einem mit dem Umrichter (2) verbundenen Generator (1) und einem Chopper (6) sowie einer Umrichtersteuerung (20) für den Umrichter (2), wobei die Umrichtersteuerung (20) einen für eine erste Toleranzzeit (t₁) zulässigen dynamischen Grenzwert (I_{dyn}) und einen statischen Grenzwert (Iₛₜₐₜ) des Umrichters (2) umfasst,
wobei der statische Grenzwert (Istat) ein Stromnennwert ist, welchen der Umrichter über eine an sich unbegrenzte Zeitdauer zu liefern geeignet ist,
**gekennzeichnet durch** Bereitstellen eines Zusatzstrom mittels eines Überstrommoduls (8), indem der statische Grenzwert des Umrichters (2) erhöht wird um einen Teil der Differenz zum dynamischen Grenzwert (I_{dyn}), wobei Überströme zwischen dem um den Zusatzstrom erhöhten statischen Grenzwert (Iₛₜₐₜ*) und dem dynamischen Grenzwert (I_{dyn}) in einer ersten Stufe auf den Umrichter (2) und einer zweiten Stufe zumindest teilweise zum Chopper (6) geleitet werden, wobei nach einer zweiten Toleranzzeit (t₂), die kleiner als die erste Toleranzzeit (t₁) ist, in die zweite Stufe umgeschaltet wird.

16. Verfahren nach Anspruch 15, **dadurch gekennzeichnet, dass** das Überstrommodul (8) nach einem der Ansprüche 3 bis 8 weitergebildet ist.

17. Verfahren nach Anspruch 15 oder 16, **dadurch gekennzeichnet, dass** der Umrichter in Windenergieanlagen eines Windparks verwendet wird, und dass an einem Parkmaster vorzugsweise eine Lastüberwachung mittels eines Böenmoduls (85') vorgesehen ist.

## Claims

1. Converter including a converter control (20) for a wind turbine which has a generator (1) which is connected to the converter (2) and a chopper (6), wherein the converter control (20) includes a dynamic limit value (I_{dyn}) which is allowable for a first tolerance time (t₁) and a static limit value (Iₛₜₐₜ) of the converter (2), wherein the static limit value (Iₛₜₐₜ) is a nominal current value which the converter (2) is suitable to provide over a period of time which is per se unlimited,
**characterized in that**
an overcurrent module (8) is provided which includes a limit value expander (81) which is designed to increase the static limit value (Iₛₜₐₜ) by a portion of the difference from the dynamic limit value (I_{dyn}) as additional current (Iₚₗᵤₛ), and a dynamic module (82) which interacts with the limit value expander (81) in such a way that overcurrents between the static limit value (Iₛₜₐₜ*) which is increased by the additional current (Iₚₗᵤₛ) and the dynamic limit value (I_{dyn}) are routed in a first stage to the converter (2) and in a second stage at least partially to the chopper (6), wherein a switch is made to the second stage after a second tolerance time (t₂).

2. Converter according to Claim 1, **characterized in that** the second tolerance time (t₂) is less than the first tolerance time (t₁).

3. Converter according to Claim 1 or 2, **characterized in that** the dynamic module (82) determines the second tolerance time (t₂) as a function of current, preferably via a current-time integral.

4. Converter according to one of the preceding claims, **characterized in that** the overcurrent module (8) has a third stage in which the first and second stages are activated simultaneously.

5. Converter according to one of the preceding claims, **characterized in that** the limit value expander (81) has a blocking element (83) which is connected to a blocking input and is designed to block the increase of the static limit value.

6. Converter according to one of the preceding claims, **characterized in that** a wind gust module (85) is provided which has inputs for power of the wind turbine and/or wind speed and is designed to output a blocking signal if a limit value is exceeded.

7. Converter according to Claims 5 and 6, **characterized in that** the output of the wind gust module (85) is connected to the input of the blocking element (83).

8. Converter according to Claim 6 or 7, **characterized in that** the wind gust module (85) has multiple outputs for controlling multiple wind turbines and is preferably situated at a wind farm master (50) of a wind farm.

9. Wind farm having a wind farm master (50) and a plurality of wind turbines, each having a generator (1) and a converter (2) according to Claim 1.

10. Wind farm according to Claim 9, **characterized in that** the overcurrent module (8) is situated at each of the wind turbines.

11. Wind farm according to Claim 9, **characterized in that** the overcurrent module (8) is situated at the wind farm master (50).

12. Wind farm according to one of Claims 9 to 11, **characterized in that** a wind gust module (85') is provided which has inputs for power of the wind turbine and/or wind speed and is designed to output a blocking signal if a limit value is exceeded, wherein the wind gust module (85') is preferably situated at the wind farm master (50).

13. Wind farm according to Claim 12, **characterized in that** the wind gust module (85') has a plurality of outputs for the individual wind turbines of the wind farm.

14. Wind farm according to one of Claims 9 to 13, **characterized in that** the overcurrent module (8) is refined according to one of Claims 2 to 4.

15. Method for operating a converter (2) for a wind turbine including a generator (1) which is connected to the converter (2) and a chopper (6) and a converter control (20) for the converter (2), wherein the converter control (20) includes a dynamic limit value (I_{dyn}) which is allowable for a first tolerance time (t₁) and a static limit value (Iₛₜₐₜ) of the converter (2),
wherein the static limit value (Iₛₜₐₜ) is a nominal current value which the converter is suitable to provide over a period of time which is per se unlimited,
**characterized by** providing an additional current with the aid of an overcurrent module (8) by increasing the static limit value of the converter (2) by a portion of the difference from the dynamic limit value (I_{dyn}), wherein overcurrents between the static limit value (Iₛₜₐₜ*) which is increased by the additional current and the dynamic limit value (I_{dyn}) are routed in a first stage to the converter (2) and in a second stage at least partially to the chopper (6), wherein a switch is made to the second stage after a second tolerance time (t₂) which is less than the first tolerance time (t₁).

16. Method according to Claim 15, **characterized in that** the overcurrent module (8) is refined according to one of Claims 3 to 8.

17. Method according to Claim 15 or 16, **characterized in that** the converter is used in wind turbines of a wind farm, and that load monitoring is preferably provided at a wind farm master with the aid of a wind gust module (85').

## Revendications

1. Convertisseur comprenant une commande de convertisseur (20) destinée à une éolienne, qui comporte un générateur (1) relié au convertisseur (2) et un amplificateur à découpage (6), dans lequel la commande de convertisseur (20) comprend une valeur limite dynamique (I_{dyn}) admise pendant un premier temps de tolérance (t₁) et une valeur limite statique (Iₛₜₐₜ) du convertisseur (2), dans lequel la valeur limite statique (Iₛₜₐₜ) est une valeur nominale de courant que le convertisseur (2) est apte à délivrer pendant une période de temps en soi non limitée,
**caractérisé en ce qu'**il est prévu un module de surintensité (8) comprenant un dispositif d'extension de valeur limite (81) qui est conçu pour augmenter la valeur limite statique (Iₛₜₐₜ) d'une partie de la différence par rapport à la valeur limite dynamique (I_{dyn}) sous forme de courant supplémentaire (Iₚₗᵤₛ), et un module dynamique (82) qui interagit avec le dispositif d'extension de valeur limite (81) de telle manière que les surintensités entre la valeur limite statique (Iₛₜₐₜ*) augmentée du courant supplémentaire (Iₚₗᵤₛ) et la valeur limite dynamique (I_{dyn}) sont dirigées dans un premier stade vers le convertisseur (2) et dans un deuxième stade au moins partiellement vers l'amplificateur à découpage (6), dans lequel un passage au deuxième stade est effectué à l'issue d'un deuxième temps de tolérance (t₂).

2. Convertisseur selon la revendication 1, **caractérisé en ce que** le deuxième temps de tolérance (t₂) est inférieur au premier temps de tolérance (t₁).

3. Convertisseur selon la revendication 1 ou 2, **caractérisé en ce que** le module dynamique (82) détermine le deuxième temps de tolérance (t₂) en fonction du courant, de préférence par une intégrale courant - temps.

4. Convertisseur selon l'une des revendications précédentes, **caractérisé en ce que** le module de surintensité (8) comporte un troisième stade dans lequel les premier et deuxième stades sont activés simultanément.

5. Convertisseur selon l'une des revendications précédentes, **caractérisé en ce que** le dispositif d'extension de limite (81) comprend un élément de blocage (83) qui est raccordé à une entrée de blocage et qui est conçu pour bloquer l'augmentation de la valeur limite statique.

6. Convertisseur selon l'une des revendications précédentes, **caractérisé en ce qu'**il est prévu un module de gestion de rafales (85) qui comporte des entrées destinées à la puissance de l'éolienne et/ou à la vitesse du vent et qui est conçu pour fournir un signal de blocage lorsqu'une valeur limite est dépassée.

7. Convertisseur selon les revendications 5 et 6, **caractérisé en ce que** la sortie du module de gestion de rafales (85) est raccordée à l'entrée de l'élément de blocage (83).

8. Convertisseur selon la revendication 6 ou 7, **caractérisé en ce que** le module de gestion de rafales (85) comporte une pluralité de sorties destinées à commander une pluralité d'éoliennes et **en ce qu'**il est de préférence disposé au niveau d'un gestionnaire de parc (50) d'un parc d'éoliennes.

9. Parc d'éoliennes comportant un gestionnaire de parc (50) et une pluralité d'éoliennes qui comportent chacune un générateur (1) et un convertisseur (2) selon la revendication 1.

10. Parc d'éoliennes selon la revendication 9, **caractérisé en ce que** le module de surintensité (8) est disposé sur les éoliennes respectives.

11. Parc d'éoliennes selon la revendication 9, **caractérisé en ce que** le module de surintensité (8) est disposé au niveau du gestionnaire de parc (50).

12. Parc d'éoliennes selon l'une des revendications 9 à 11, **caractérisé en ce qu'**il est prévu un module de gestion de rafales (85') qui comporte des entrées destinées à la puissance et/ou à la vitesse du vent et qui est conçu pour fournir un signal de blocage lorsqu'une valeur limite est dépassée, dans lequel le module de gestion de rafales (85') est de préférence disposé au niveau du gestionnaire de parc (50).

13. Parc d'éoliennes selon la revendication 12, **caractérisé en ce que** le module de gestion de rafales (85') comporte plusieurs sorties destinées aux différentes éoliennes du parc d'éoliennes.

14. Parc d'éoliennes selon les revendications 9 à 13, **caractérisé en ce que** le module de surintensité (8) est perfectionné selon l'une des revendications 2 à 4.

15. Procédé pour faire fonctionner un convertisseur (2) destiné à une éolienne, comprenant un générateur (1) relié au convertisseur (2) et un amplificateur à découpage (6) ainsi qu'une commande de convertisseur (20) destinée au convertisseur (2), dans lequel la commande d'onduleur (20) comprend une valeur limite dynamique (I_{dyn}) admise pendant un premier temps de tolérance (t₁) et une valeur limite statique (Iₛₜₐₜ) de l'onduleur (2),
dans lequel la valeur limite statique (Iₛₜₐₜ) est une valeur nominale de courant que le convertisseur est apte à délivrer pendant une période de temps en soi non limitée,
**caractérisé en ce qu'**il fournit un courant supplémentaire au moyen d'un module de surintensité (8) en augmentant la valeur limite statique du convertisseur (2) d'une partie de la différence par rapport à la valeur limite dynamique (I_{dyn}), dans lequel les surintensités entre la valeur limite statique (Iₛₜₐₜ*) augmentée du courant supplémentaire et la valeur limite dynamique (I_{dyn}) sont dirigées dans un premier stade vers le convertisseur (2) et dans un deuxième stade au moins partiellement vers l'amplificateur à découpage (6), dans lequel un passage au deuxième stade est effectué à l'issue d'un deuxième temps de tolérance (t₂) qui est inférieur au premier temps de tolérance (t₁).

16. Procédé selon la revendication 15, **caractérisé en ce que** le module de surintensité (8) est perfectionné selon l'une des revendications 3 à 8.

17. Procédé selon la revendication 15 ou 16, **caractérisé en ce que** le convertisseur est utilisé dans des éoliennes d'un parc d'éoliennes, et **en ce qu'**il est de préférence prévu au niveau d'un gestionnaire de parc une surveillance de la charge au moyen d'un module de gestion de rafales (85').
